# FASCICULE DE BREVET EUROPEEN

(11) **EP 0 857 138 B1**
(45) Date de publication et mention de la délivrance du brevet: **06.02.2002**
(21) Numéro de dépôt: 96934948.9
(22) Date de dépôt: 21.10.1996
(51) Int. Cl.: B62M 7/02, F02B 61/02

(54) **MOTEUR A EXPLOSION POUR MOTOCYCLETTE**
BRENNKRAFTMASCHINE FÜR MOTORRAD
MOTORCYCLE INTERNAL COMBUSTION ENGINE

(30) Priorité: 24.10.1995 FR 9512530
(43) Date de publication de la demande: 12.08.1998
(73) Titulaire: Midy, Olivier, 94370 Jucy-en-Brie (FR)
(72) Inventeur: Midy, Olivier, 94370 Jucy-en-Brie (FR)
(74) Mandataire: Breesé, Pierre
(86) Numéro de dépôt international: FR9601645
(87) Numéro de publication internationale: WO9715486

(56) Documents cités:
- FR-A- 2 533 625
- GB-A- 192 482
- GB-A- 1 348 989
- US-A- 4 321 978
- US-A- 4 446 828

## Description

La présente invention concerne une motocyclette. On distingue dans l'état de la technique principalement trois types de moteur pour motocyclette : des moteurs en ligne comportant des cylindres en ligne ou inclinés, des moteurs comportant des cylindres en V et des moteurs comportant des cylindres opposés.

L'invention relève de ce dernier type d'architecture. Les moteurs à cylindre opposé, ou moteurs à plat présentent un excellent équilibrage, et une annulation de la plupart des composantes des forces d'inertie rotatives et alternatives. En particulier, les forces libres du premier ordre et les'forces libres du deuxième ordre, ainsi que les moments libres du premier ordre sont en principe nuls. Il existe dans l'état de la technique des réalisations de moteurs comportant deux cylindres opposés, dits "flat twin", ou encore à 4 ou 6 cylindres formant deux ou trois paires de cylindres opposés. Dans tous les cas, les cylindres sont disposés transversalement. Cette configuration, qui est séduisante du point de vue de l'équilibrage des forces, présente néanmoins l'inconvénient d'un encombrement latéral important, ce qui est préjudiciable pour la conduite de la moto.

On a également décrit dans l'état de la technique des motocyclettes comportant un moteur à cylindres opposés orientés longitudinalement. Il en résulte toutefois un encombrement excessif. De plus, le cylindre arrière est mal refroidi et l'ensemble n'est pas compatible avec un dessin de partie cycle moderne, en particulier en ce qui concerne l'empattement et la position de l'articulation du bras oscillant.

Un brevet de l'art antérieur, le brevet britannique 1348989 a décrit une motocyclette comportant un moteur à cylindres opposés, refroidi par air, dont l'axe des cylindres forme avec l'axe longitudinal un angle compris entre 30° et 45°. L'échappement avant se fait sous le cylindre, alors que l'échappement arrière se fait sur le moteur. Ce document précise par ailleurs qu'il est préférable d'augmenter l'angle du moteur afin d'améliorer le refroidissement. De toute manière, l'homme du métier serait conduit à choisir un angle important car plus cet angle est faible, plus le cylindre avant "masque" en partie le cylindre arrière, ce qui nuit à son refroidissement.

L'invention a pour objet de remédier à ces inconvénients en proposant une motocyclette munie d'un moteur conservant les avantages des moteurs à cylindres opposés, compatible avec l'encombrement admissible sur une motocyclette moderne.

A cet effet, l'invention concerne plus particulièrement une motocyclette comportant un moteur du type à cylindres opposés, dans lequel les axes des cylindres sont placés dans des plans verticaux longitudinaux, caractérisé en ce que les axes des cylindres sont inclinés par rapport à l'axe horizontal d'un angle compris entre 15° et 30°, préférentiellement de l'ordre de 25°.

Cette inclinaison, totalement inhabituelle pour une motocyclette, permet de concilier de manière avantageuse l'équilibrage optimal du moteur avec un encombrement longitudinal et latéral acceptable.

De préférence, les cylindres sont refroidis par la circulation d'un fluide caloriporteur.

Selon le mode de réalisation préféré, les axes des cylindres sont inclinés d'un angle d'environ 25° par rapport à un axe horizontal. Ce mode de réalisation permet de réduire l'encombrement longitudinal des moteurs, sans pour autant augmenter de manière excessive la hauteur du moteur, ou d'élever de manière préjudiciable le centre de gravité du moteur.

De préférence, les arbres primaires et secondaires sont situés en-dessous du cylindre arrière et en arrière du vilebrequin du moteur. Selon un mode de réalisation avantageux, les transferts et conduits d'échappement des cylindres sont dirigés vers le bas.

L'invention sera mieux comprise à la lecture de la description qui suit, faisant référence aux dessins annexés où :

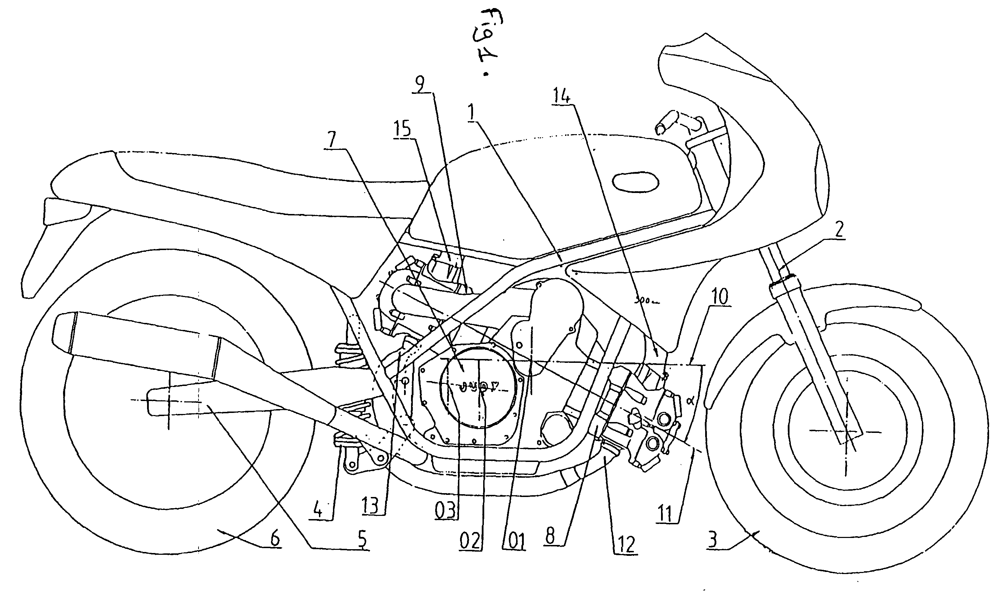

- la figure 1 représente une vue de face d'une motocyclette selon l'invention ;
- la figure 2 représente une vue en perspective, à une échelle agrandie du moteur.

La motocyclette comporte de manière connue un châssis tubulaire (1), une fourche (2) supportant une roue avant (3), et des éléments de suspension (4) associés à un bras (5) supportant une roue arrière (6).

Le moteur (7) comporte dans l'exemple décrit deux cylindres (8, 9) disposés en opposition, et inclinés par rapport à un axe horizontal (10) suivant un axe (11) formant un angle α de 25° environ. Le cylondre avant (8) est incliné vers le bas, et le cylindre arrière (9) est incliné vers le haut. Les cylindres (8, 9) sont refroidis par eau, provenant d'un radiateur selon une technique connue dans l'état de la technique.

L' axe du vilebrequin (O1) est positionné au-dessus de l'axe de l'arbre primaire (O2) et de l'axe (O3) de l'arbre secondaire (O3). Les conduits d'échappement (12) du cylindre avant (8) et (13) du cylindre arrière (9) sont dirigés vers le bas, alors que les conduits d'admission (14) du cylindre avant (8) et (15) du cylindre arrière (9) sont dirigés vers le haut.

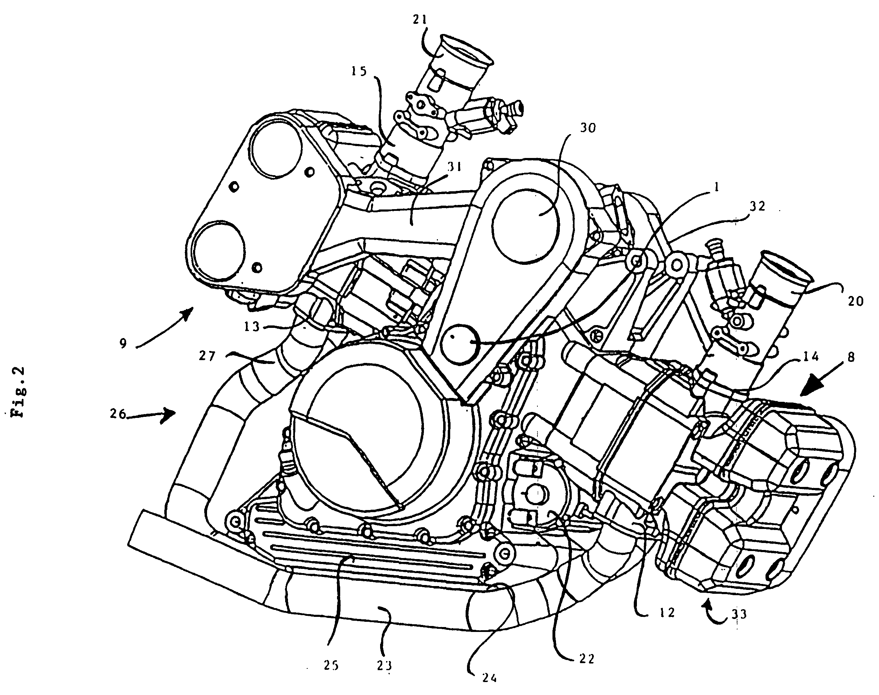

La figure 2 représente une vue agrandie du moteur.

Les cornets d'admission avant (20) et arrière (21) communiquent tout deux avec une boîte à air unique, non représentée sur la figure. Le démarreur électrique (22) est disposé sous le cylndre avant, de façon à abaisser le centre de gravité du moteur.

Le segment médian. (23) de l'échappement avant passe dans un logement (24) prévu sur le coté du carter (25). L'échappement arrière (26) présente une boucle (27) destinée à équilibrer les longueurs de l'échappement avant et arrière.

Le moteur présente à sa partie supérieure une pompe à eau (30) tournant à une vitesse égale à la moitié de la vitesse du moteur. Elle est entraînée par la courroie protégée par les carters (30). La pompe à eau entraine les cullasses par l'intermédiaire de courroies crantées protégées pr les carters (31, 32).

Le moteur comporte par ailleurs une pompe à huile (33) refoulant l'huile susceptible de s'écouler dans la culasse avant, du fait de l'inclinaison, vers le carter. Cette pompe à huile est placée dans un logement prévu dans la paroi du cylindre. Dans le cas où les deux cylindres sont identiques, le logement inutilisé du cylindre arrière est obturé par un bouchon.

Le moteur comporte de préférence deux cylindres (8, 9) ainsi que des culasses et les hauts-moteur de formes identiques, de façon à réduire les coûts de fabrication.

L'invention est décrite dans ce qui précède à titre d'exemple non limitatif. En particulier, une telle architecture peut être réalisée sous forme bicylindre, quadricylindre, ou six cylindres.

## Revendications

1. Motocyclette comportant un moteur à explosion du type à cylindres opposés, dans lequel les axes (11) des cylindres (8, 9) sont dans des plans verticaux longitudinaux de la motocyclette, **caractérisée en ce que** les axes des cylindres sont inclinés par rapport à l'axe horizontal d'un angle compris entre 15° et 30°.

2. Motocyclette selon la revendication 1 **caractérisée en ce que** les cylindres (8, 9) sont refroidis par un fluide caloporteur.

3. Motocyclette selon l'une quelconque des revendications précédentes **caractérisée en ce que** les axes (11) des cylindres (8, 9) sont dans des plans longitudinaux, verticaux, et sont inclinés d'un angle d'environ 25° par rapport à l'axe horizontal (10).

4. Motocyclette selon l'une quelconque des revendications précédentes **caractérisée en ce que** les arbres primaires et secondaires sont situés en dessous du cylindre arrière et en arrière du vilebrequin.

5. Motocyclette selon l'une quelconque des revendications précédentes **caractérisée en ce que** les transferts et conduits d'échappement de chacun des cylindres (8, 9) sont dirigés vers le bas.

6. Motocyclette selon l'une quelconque des revendications précédentes **caractérisée en ce que** les moyens d'admission de chacun des cylindres (8, 9) sont dirigés vers le haut.

7. Motocyclette selon l'une quelconque des revendications précédentes **caractérisée en ce que** le carter présente un renfoncement pour le passage de l'échappement du cylindre avant.

8. Motocyclette selon l'une quelconque des revendications précédentes **caractérisée en ce que** le cornet d'admission du cylindre avant et la cornet d'admission du cylindre arrière débouchent dans une boîte à air unique.

9. Motocyclette selon l'une quelconque des revendications précédentes **caractérisée en ce que** la cullasse inclinée vers le bas présente un logement pour recevoir une pompe à huile refoulant l'huile vers le carter.

10. Motocyclette selon l'une des revendications précédentes **caractérisée en ce que** les axes (11) des cylindres (8, 9) sont inclinés d'un angle de l'ordre de 25° par rapport à un axe horizontal (10).

11. Motocyclette selon la revendication 10 **caractérisée en ce que** la suspension arrière de type cantilever est positionnée latéralement par rapport au cylindre arrière, et prend appui sur la colonne de direction.

## Patentansprüche

1. Motorrad mit einem Verbrennungsmotor von der Art eines Motors mit gegenüberstehend angeordneten Zylindern, in dem die Achsen (11) der Zylinder (8, 9) vertikal in Längsrichtung zum Motorrad angeordnet sind, **dadurch gekennzeichnet, dass** die Zylinderachsen zur Horizontalachse in einem Winkel zwischen 15 und 30° geneigt sind.

2. Motorrad nach Anspruch 1, **dadurch gekennzeichnet, dass** die Zylinder (8, 9) durch eine wärmeübertragende Flüssigkeit gekühlt werden.

3. Motorrad nach einem der vorherigen Ansprüche, **dadurch gekennzeichnet, dass** die Achsen (11) der Zylinder (8, 9) vertikal in Längsrichtung angeordnet sind und mit einem Winkel von etwa 25° zur Horizontalachse (10) geneigt sind.

4. Motorrad nach einem der vorherigen Ansprüche, **dadurch gekennzeichnet, dass** die Antriebs- und Hauptwellen unter dem hinteren Zylinder und hinter der Kurbelwelle angeordnet sind.

5. Motorrad nach einem der vorherigen Ansprüche, **dadurch gekennzeichnet, dass** die Auspuffdurchgänge und -rohre für jeden Zylinder (8, 9) nach unten gerichtet sind.

6. Motorrad nach einem der vorherigen Ansprüche, **dadurch gekennzeichnet, dass** die Einlassmittel eines jeden Zylinders (8, 9) nach oben gerichtet sind.

7. Motorrad nach einem der vorherigen Ansprüche, **dadurch gekennzeichnet, dass** die Ölwanne eine Verstärkung für den Durchtritt des vorderen Zylinderauspuffs aufweist.

8. Motorrad nach einem der vorherigen Ansprüche, **dadurch gekennzeichnet, dass** der Einlasstrichter des vorderen Zylinders und der Einlasstrichter des hinteren Zylinders in einen einzigen Luftbehälter münden.

9. Motorrad nach einem der vorherigen Ansprüche, **dadurch gekennzeichnet, dass** der nach unten geneigte Zylinderkopf eine Vorrichtung zur Aufnahme einer Ölpumpe aufweist, die das Öl zur Ölwanne fördert.

10. Motorrad nach einem der vorherigen Ansprüche, **dadurch gekennzeichnet, dass** die Achsen (11) der Zylinder (8, 9) sich vertikal in Längsrichtung zum Motorrad befinden und in einem Winkel in der Größenordnung von 25° zur Horizontalachse (10) geneigt sind.

11. Motorrad nach Anspruch 10, **dadurch gekennzeichnet, dass** die hintere Aufhängung in Cantileverart seitlich zum hinteren Zylinder angeordnet und auf die Lenksäule abgestützt ist.

## Claims

1. Motorcycle with an internal combustion engine of the opposite cylinders type, in which the axes (11) of the cylinders (8, 9) are in the longitudinal vertical planes of the motorcycle, **characterised in that** the axes of the cylinders are inclined relative to the horizontal axis at an angle comprised between 15° and 30°.

2. Motorcycle according to claim 1 **characterised in that** the cylinders (8, 9) are cooled by a coolant fluid.

3. Motorcycle according to any one of the preceding claims **characterised in that** the axes (11) of the cylinders (8, 9) are in the longitudinal, vertical, planes and are inclined at an angle of about 25° relative to the horizontal axis (10).

4. Motorcycle according to any one of the preceding claims **characterised in that** the primary and secondary shafts are located below the rear cylinder and behind the crankshaft.

5. Motorcycle according to any one of the preceding claims **characterised in that** the transfers and exhaust pipes of each of the cylinders (8, 9) are directed downwards.

6. Motorcycle according to any one of the preceding claims **characterised in that** the intake means of each of the cylinders (8, 9) are directed upwards.

7. Motorcycle according to any one of the preceding claims **characterised in that** the sump has a recess for passage of the exhaust from the front cylinder.

8. Motorcycle according to any one of the preceding claims **characterised in that** the intake pipe of the front cylinder and the intake pipe of the rear cylinder open up into a single air box.

9. Motorcycle according to any one of the preceding claims **characterised in that** the downward inclined cylinder head has a housing to receive an oil pressure pump supplying oil to the sump.

10. Motorcycle according to any one of the preceding claims **characterised in that** the axes (11) of the cylinders (8, 9) are inclined at an angle of the order of 25° relative to a horizontal axis (10).

11. Motorcycle according to claim 10, **characterised in that** the rear suspension of the cantilever type is positioned laterally relative to the rear cylinder, and bears on the steering column.
